(19)

Europäisches
Patentamt
European
Patent Office
Office européen
des brevets

(11) **EP 2 988 605 B1**

(12) **EUROPEAN PATENT SPECIFICATION**

(45) Date of publication and mention
of the grant of the patent:
**31.05.2017 Bulletin 2017/22**

(21) Application number: **14719004.5**

(22) Date of filing: **23.04.2014**

(51) Int Cl.:
**A23C 11/04** *(2006.01)*    **A23F 3/30** *(2006.01)*

(86) International application number:
**PCT/EP2014/058261**

(87) International publication number:
**WO 2014/173966 (30.10.2014 Gazette 2014/44)**

(54) **POWDERED COMPOSITION FOR USE IN AN INSTANT MILK TEA POWDER**

PULVERFÖRMIGE ZUSAMMENSETZUNG ZUR VERWENDUNG IN EINEM
MILCH-TEE-INSTANTPULVER

COMPOSITION EN POUDRE UTILISÉE DANS UNE POUDRE DE THÉ AU LAIT INSTANTANÉ

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **27.04.2013 PCT/CN2013/074893
17.06.2013 EP 13172217**

(43) Date of publication of application:
**02.03.2016 Bulletin 2016/09**

(73) Proprietors:
• **Unilever PLC
London, Greater London EC4Y 0DY (GB)**
Designated Contracting States:
**CY GB IE MT**
• **UNILEVER N.V.
3013 AL Rotterdam (NL)**
Designated Contracting States:
**AL AT BE BG CH CZ DE DK EE ES FI FR GR HR
HU IS IT LI LT LU LV MC MK NL NO PL PT RO RS
SE SI SK SM TR**

(72) Inventor: **HE, Jian
Shanghai 200335 (CN)**

(74) Representative: **Askew, Sarah Elizabeth
Unilever PLC
Unilever Patent Group
Colworth House
Sharnbrook
Bedford MK44 1LQ (GB)**

(56) References cited:
**WO-A1-2005/074717      WO-A1-2010/005297
GB-A- 701 697            US-A- 2 913 342
US-A- 4 092 438          US-A- 5 128 156
US-A1- 2007 212 453**

• **DATABASE WPI Week 201331 Thomson
Scientific, London, GB; AN 2013-G05570
XP002711615, & CN 102 870 895 A (SHANDONG
DASHU BIOLOGICAL ENG TECHNOLOGY) 16
January 2013 (2013-01-16)**

**Description**

**TECHNICAL FIELD OF THE INVENTION**

The invention relates to a powdered composition for use in an instant milk tea powder. In particular it relates to a powdered composition which does not require a carrier / bulking agent such as maltodextrin.

**BACKGROUND TO THE INVENTION**

Beverages based on the tea plant (*Camellia sinensis*) have been popular throughout the world for many hundreds of years. Traditionally the beverages are produced by infusing leaf tea in hot water. However, leaf tea is quite slow to infuse and not always convenient. Therefore some consumers are also interested in tea beverages which can be made instantly. Tea powders to which hot water is added to produce an instant beverage have been developed. Tea powders of course contain tea solids, but may also include other ingredients of the final beverage, such as dairy protein, fat and sugar. Such powders are usually produced by spray-drying, and therefore typically contain other ingredients which contribute little to the sensory properties of the beverage, but which have a function in the preparation and / or storage of the powder; for example, maltodextrins or low dextrose-equivalent corn syrups which act as a carrier for the fat and / or a bulking agent.

It would be desirable to remove the maltodextrin / corn syrup components from the powder, since they add cost and also calories, and to replace them with necessary functional ingredients such as sugar, milk protein and / or fat thereby rendering it unnecessary for the consumer to add sugar or milk / cream to the beverage, or at least reducing the amount of sugar needed to give the beverage its desirable sweet taste. However, this is not straightforward because sugars are hygroscopic. This hygroscopicity causes lumping during spray-drying and results in a sticky powder. WO 12 / 050439 addresses this problem by using a specific spray-drying process in which the sucrose is injected into the spray drier as a dry powder while simultaneously spray drying a dispersion containing the remaining ingredients. This process results in a powder which has an amorphous matrix in which sucrose crystallites are embedded. The powder can be a foamer, creamer, or topping base, and can be used for preparing ready-to-drink beverages, such as coffee, tea or chocolate. However, this requires a split-stream process which is more complex and costly to implement in a factory than conventional spray-drying. It also requires the use of costly high-grade sugar: the sugar is not dissolved in water before use, so cannot be filtered to remove impurities.

Thus there remains a need for a powdered composition which can be produced in by a conventional spray-drying process but which does not contain a carrier or bulking agent.

**SUMMARY OF THE INVENTION**

We have now identified formulations which have increased sugar content, and also increased milk protein and fat contents, which do not require a carrier such as maltodextrin / corn syrup but which can nonetheless be spray-dried using a conventional spray-drier. Accordingly, in a first aspect, the present invention provides a powdered composition comprising:

- 25-35% of di-/tri-saccharides other than lactose;
- 3-20% of lactose;
- 2-15% milk protein other than processed soluble caseinate;
- 35-50% fat; and
- 3-7% emulsifier;

wherein the powdered composition comprises less than 10% of maltodextrin and/or glucose syrup having a DE of less than 40.

Typical non-dairy creamers use a processed soluble caseinate, such as sodium caseinate, as the source of the protein. We have now found that by using a source of milk protein other than processed soluble caseinate, such as skim milk powder, whole milk powder, or whey protein, there is a window of formulations which contain increased amounts of sugar but which can nonetheless be spray dried to produce a powdered composition.

The powdered composition is particularly suitable for forming the base of an instant milk tea powder. By using sugar and milk powder or whey powder in the powdered composition instead of a carrier / bulking agent, less sugar and milk powder need to be added to the powdered composition produce the instant milk tea powder. Thus the volume and cost of the instant milk tea powder is reduced whilst still providing all the required functionality in the final product.

In a second aspect, the present invention provides a process for producing a powdered composition according to the first aspect of the invention, the process comprising the steps of:

- producing a dispersion in water of (by weight of the total solids) 25-35wt% of di-/tri-saccharides other than lactose; 3-20wt% of lactose, 2-15% milk protein other than caseinate, 35-50% fat and 3-7% emulsifier and which comprises less than 10% (by weight of total solids) of maltodextrin and/or glucose syrup having a DE of less than 40; and
- spray-drying the dispersion to produce the powdered composition.

## DETAILED DESCRIPTION

All percentages are given as % by weight of dry composition, unless otherwise specified.

Glucose syrups (sometimes called corn syrups) are starch hydrosylates consisting essentially of mono-, di-, and higher saccharides. Glucose syrups can be made from starch from any source, for example (but not necessarily) corn. Since glucose syrups are complex multi-component sugar mixtures, they are commonly classified by their dextrose equivalent (DE). The DE is related to the number average molecular weight $\langle M \rangle_n$ of the sugars, and can be calculated from the equation below (Journal of Food Engineering, 33 (1997) 221-226):

$$\langle M \rangle_n = 18016 / DE$$

Starch hydrosylates with a DE of about 20 or below are commonly known as maltodextrins. Due to their low DE, they contain only small amounts of mono- and disaccharides.

Since the present invention has identified a window of formulations which can be spray-dried by a conventional spray-drying process without the need for a carrier / filler, the powdered composition comprises at most 10% of maltodextrin and glucose syrup, in particular glucose syrup having a DE of less than 40, since low DE glucose syrups contain significant amounts of higher saccharides which do not contribute to the sensory properties of the final beverage. More preferably the powdered composition comprises less than 5%, even more preferably less than 2% of maltodextrin or glucose syrup. Most preferably the powdered composition does not contain any maltodextrin or glucose syrup.

The powdered composition comprises from 25 to 35% (in total) of one or more disaccharides other than lactose, for example sucrose or maltose, and / or one or more tri-saccharides such as maltotriose. Preferably the composition comprises at least 27%, more preferably at least 29% of di-/trisaccharides other than lactose. Most preferably the disaccharide is sucrose. In a preferred embodiment, the powdered composition comprises 29 - 34%, preferably 30 - 33% sucrose.

The powdered composition comprises 3-20% of lactose, which is preferably provided together with the protein in the form of skim milk powder (which is approximately 50% lactose), whole milk powder (approximately 35% lactose) or whey powder (whose lactose content varies, depending on whether the whey protein has been concentrated or isolated).

The powdered composition preferably contains less than 10% monosaccharides (e.g. glucose or fructose) since these are more hygroscopic than disaccharides. Their hygroscopicity makes it harder to spray-dry dispersions containing them. More preferably the composition contains less than 5% monosaccharides, and most preferably essentially no monosaccharides. The di-/trisaccharides can be provided in the form of a glucose syrup having a suitable DE; however, this is not preferred since glucose syrups also contain monosaccharides, and also may contain higher saccharides (i.e. having 4 or more saccharide units) which contribute little to the sensory properties of the final beverage.

The powdered composition comprises from 2 to 15% milk protein that is not provided in the form of processed soluble caseinate. Processed soluble caseinates include sodium caseinate or potassium caseinate. Preferably the powdered composition comprises at least 4%, more preferably at least 5% milk protein that is not processed soluble caseinate; and preferably at most 12%, more preferably at most 10%. Preferably the composition contains less than 1% processed soluble caseinate, more preferably it contains essentially no processed soluble caseinate. Preferably the milk protein is provided as skim milk powder, whole milk powder, whey powder, whey protein concentrate or whey protein isolate. Without wishing to be limited by theory, it is believed that this is because skim milk powder, whole milk powder and whey protein do not increase the viscosity of the dispersion as much as processed soluble caseinate does. The slower viscosity dispersion is better for spray drying. Most preferably the milk protein is provided as skim milk powder, preferably in an amount of from 5 to 50%, more preferably 10-25%, most preferably 16-22%. As well as enabling spray-drying, skim milk powder also provides good flavour when the powdered composition is used to make milk tea. Thus it provides a further contribution to the desired properties of the final beverage product. Whey protein powder is less preferred because it does not provide the desirable flavour of skim milk powder.

Whole milk powder is also less preferred because it is generally more expensive to use as the source of the milk protein than skim milk powder.

The powdered composition comprises from 35 to 50% of fat, preferably at least 40%, more preferably at least 42%; and preferably at most 47%, more preferably at most 45%. In the context of the present invention, the term "fat" includes both fats and oils, but is not intended to include emulsifiers, such as mono-/di-glycerides of fatty acids. The fat is preferably a vegetable oil, more preferably a hardened vegetable oil, most preferably hardened palm kernel oil or hardened coconut oil. However, other hardened or unhardened vegetable oils may be used. Whole milk powder contains approximately 27% milk fat. Thus if whole milk powder is used as the source of the dairy protein, then the fat component of the powdered composition will contain some dairy fat, whilst the rest can be, for example, hardened palm kernel oil or hardened coconut oil.

The powdered composition comprises an emulsifier in an amount of from 3 to 7%, preferably from 4 to 6%. Suitable emulsifiers include mono- and di-glycerides of fatty acids and diacetyl tartaric acid esters of mono- and diglycerides.

The powdered composition may optionally contain small amounts (typically less than 4%) of other ingredients, for example stabilisers (such as potassium phosphate and sodium triphosphate), flavours (such as milk flavours and tea flavours), anti-caking agents (such as tri-calcium phosphate and silica), hydrocolloids (such as gums and starch-based polysaccharides), and high intensity sweeteners (such as stevia, sucralose, neotame, aspartame, acesulfame-K etc.).

In a particularly preferred embodiment, the powdered composition comprises:

- 25-35%, preferably 30-33% sucrose;
- 10-25%, preferably 16-22% skim milk powder;
- 35-50%, preferably 42-45% hardened vegetable oil; and
- 3-7%, preferably 4-6% emulsifier.

The powdered composition of the invention is especially suitable for forming the basis of an instant milk tea powder. For example, an instant milk tea powder containing 15 - 90%, preferably 30 - 70%, more preferably 40 - 60% of the powdered composition, 1 - 15% preferably 2 - 12%, more preferably 3 - 10% of tea solids and 0 - 70%, preferably 20 - 60%, more preferably 30 - 50% of monosaccharides or disaccharides, preferably sucrose, in addition to those present in the composition itself. The instant milk tea powder may also comprise other ingredients in small amounts, such as 0 to 4% of anti-caking agents and / or hydrocolloids and / or flavours and / or colours and / or high intensity sweeteners (such as stevia, sucralose, neotame, aspartame, acesulfame-K etc.), in order to increase the sweetness and / or allow the amount of sugars to be reduced. It is preferred that the instant milk tea powder contains from 0.02 to 0.3% of xanthan, as we have found that including xanthan in this amount improves the mouthfeel of the beverage.

The tea solids are preferably provided in the form of a powder, produced by spray-drying or freeze-drying a water-extract of leaf tea. The tea solids are preferably black tea solids. "Tea" for the purposes of the present invention means material from *Camellia sinensis* var. *sinensis* and/or *Camellia sinensis* var. *assamica.* Especially preferred is material from var. *assamica* as this has a higher level of tea actives than var. *sinensis.* "Black tea" refers to substantially fermented tea. "Fermentation" refers to the oxidative and hydrolytic process that tea undergoes when certain endogenous enzymes and substrates are brought together. During this process colourless catechins in the leaves are converted to a complex mixture of yellow and orange to dark-brown polyphenolic substances.

The powdered composition of the invention can also be used in other products, such as instant milk coffee and creamy soups.

The powdered composition can be prepared by producing a dispersion in water of (by weight of the total solids) 25-35% of di-/tri-saccharides other than lactose; 3-20% of lactose, 2-15% milk protein which is not provided in the form of processed soluble caseinate, 35-50% fat and 3-7% emulsifier and which comprises less than 10% (by weight of total solids) of maltodextrin and/or glucose syrup having a DE of less than 40; and then spray-drying the dispersion. Preferably the dispersion comprises 40 - 60wt% of the powdered composition and 60 to 40wt% of water. Preferably after spray-drying, 0.2 - 1.5% of an anti-caking agent, more preferably silica is added, and the mixture is then further dried in a fluid bed dryer to remove any remaining moisture.

**EXAMPLES**

The invention will now be further described with reference to the following examples.

Example 1: Spray-drying

Powdered compositions were prepared according to the formulations in Table 1. The approximate amounts of lactose and milk protein present in each formulation from the skim milk powder are also shown. The ingredients were dispersed / dissolved in an equal mass of water and the dispersion was then emulsified and homogenized at 18-20MPa. A relatively large amount of water (compared to what would typically be used to disperse a conventional powdered non-dairy creamer) was required so that the viscosity of each dispersion was suitable for spray-drying.

Table 1

| Example No. Ingredient (wt% of total solids) | 1A | 1B | 1C | 1D |
|---|---|---|---|---|
| Hydrogenated vegetable oil | 40.0 | 42.0 | 45.0 | 45.0 |
| Skim milk powder, of which | 15.0 | 22.0 | 16.0 | 19.0 |
| lactose | 7.5 | 11.0 | 8.0 | 9.5 |
| protein | 5.0 | 7.3 | 5.3 | 6.3 |
| Sucrose | 40.0 | 30.0 | 33.0 | 30.0 |
| Emulsifier (E471, E472e) and Stabilizer (E340ii, E451 i) | 5.0 | 6.0 | 6.0 | 6.0 |

Formulations 1A, 1B and 1C were spray-dried in a 500-type pressure spray drying tower (a small factory-scale spray drier which evaporates approximately 500kg water per hour), using an inlet air temperature in the range of 150 to 200°C and an outlet air temperature of greater than 85°C. Formulations 1C and 1D were spray-dried in a 1000-type pressure spray drying tower (a larger spray drier which evaporates approximately 1000kg water per hour), again using an inlet air temperature in the range of 150 to 200°C and an outlet air temperature of greater than 85°C. After spray-drying, an anti-caking agent (silica) in an amount of 0.35 - 1.0% was mixed with the spray-dried powders, and the mixtures were then further dried in a fluid bed dryer to remove any remaining moisture.

With formulation 1A, the powder stuck to the inner wall of the tower during spray-drying and became browned as a result of having been exposed to hot air for a long time. Thus this formulation is not suitable for spray drying.

Formulation 1 B contained less sucrose than 1A. The sucrose was mostly replaced with skim milk powder, and to a lesser extent, vegetable oil and emulsifier. The dispersion was successfully spray-dried with little powder sticking to the wall and much less browning.

Formulation 1C also contained less sucrose than 1A, albeit somewhat more than 1 B. The sucrose was mostly replaced with vegetable oil, and to a lesser extent, skim milk powder and emulsifier. The dispersion was successfully spray-dried in the 500-type spray drying tower, with little powder sticking to the wall and little browning. In the 1000-type tower, some powder accumulated on the tower inner wall, and became dark yellow, eventually falling off the wall in lumps. This is believed to be because the droplets spent longer inside the larger tower, and therefore had an increased chance of sticking to the wall. The fact that Formulation 1C was successfully spray-dried in the smaller tower, but did not perform as well in the larger one, indicates that this formulation is close to the upper limit of sugar content.

Formulation 1 D contained less sucrose than 1C, but more skim milk powder. The dispersion was successfully spray-dried in the larger tower, with less powder sticking to the walls than for 1C and no apparent browning. The spray-dried powder contained some weak lumps, which dispersed when the powder was dissolved in hot water. Adding 1.0% of silica prior to fluid bed dryeing was found to significantly reduce the formation of these lumps.

8g of the spray-dried of powder Example 1 D was mixed with 2g of tea powder and dissolved in 150mL of hot water. The powder dissolved well, resulting in an instant tea beverage of good appearance.

These examples show that it is possible to spray-dry formulations which have increased sugar content, and also increased milk protein and fat contents compared to conventional non-dairy dreamers using factory-scale spray drying equipment without requiring a carrier such as maltodextrin / corn syrup. These formulations are therefore suitable for commercial scale production on conventional process lines.

Example 2: Instant milk tea compositions

Table 2 shows two instant milk tea formulations containing similar amounts of protein and sugar. Example 2A is an instant tea formulation based on the powdered composition of Example 1 D. Example 2B is an instant tea formulation based on a conventional non-dairy creamer, consisting of 60% glucose syrup having a DE of about 25, 32% hydrogenated vegetable oil, 1.2% sodium caseinate, 3% skim milk powder, 2% emulsifier (mono- and diglycerides of fatty acids) and 1.9% stabiliser (potassium phosphate).

Table 2

| Ingredient (g) | Example 2A | Example 2B |
|---|---|---|
| Sugar | 6.0 | 6.68 |
| Xanthan gum | 0.01 | |
| Conventional non-dairy creamer | | 7.3 |

(continued)

| Ingredient (g) | Example 2A | Example 2B |
|---|---|---|
| Powder of Example 1 D | 5.2 | |
| Skim Milk Powder | | 0.47 |
| Tea Powder | 0.48 | 0.5 |
| Milk Flavour | 0.03 | 0.03 |
| Total mass | 11.72 | 14.98 |
| Volume (mL) | 16.7 | 22.7 |

These were made into beverages by mixing each formulation with about 150mL of hot water. The beverages were tasted and found to have similar sensory properties.

Comparison of examples 2A and 2B demonstrates that removing the carrier substantially reduces the amount (both in terms of mass and volume) of instant milk tea composition needed to produce the beverage, whilst maintaining the sensory properties. The cost and calorie content were also reduced.

Example 3: Comparison of sources of milk protein

Aqueous solutions of skim milk powder, whey protein concentrate powder and sodium caseinate powder were prepared at three different protein concentrations, as shown in Table 3. Each ingredient was dissolved in hot water at 72°C with stirring for 2 minutes. The solutions were hallowed to cool down to 56°C, and then their viscosities were measured using a Brookfield RV type viscometer with a rotation speed of 100 rpm using a #2 rotor.

Table 3

| | Amount (g) | Water (mL) | Protein concentration (g/ml) | Viscosity (cp) |
|---|---|---|---|---|
| Skim milk powder (33% protein) | 47.5 | 500 | 0.031 | 11.1 |
| | 47.5 | 250 | 0.063 | 13.6 |
| | 47.5 | 125 | 0.125 | 21.8 |
| Whey protein concentrate (33% protein) | 47.5 | 500 | 0.031 | 11.5 |
| | 47.5 | 250 | 0.063 | 15.0 |
| | 47.5 | 125 | 0.125 | 23.8 |
| Sodium caseinate (88% protein) | 17.8 | 500 | 0.031 | 12.7 |
| | 17.8 | 250 | 0.063 | 20.6 |
| | 17.8 | 125 | 0.125 | 86.4 |

From Table 3 it is apparent that the viscosity of the sodium caseinate solution increased sharply with increasing protein concentration, while the viscosities of the skim milk powder and whey protein increased only gradually. Since the viscosities of the whey protein concentrate solutions were similar to those of the skim milk powder at the same protein concentration, it is expected that dispersions similar to examples 1A to 1 D, but which contain whey powder instead of skim milk powder would also be suitable for spray- drying. Since whole milk powder has the same protein composition as skim milk powder, and differs only in terms of the presence of fat, dispersions which contain whole milk powder are also expected to be suitable for spray-drying. However, the large increase in the viscosity of the sodium caseinate solutions with protein concentration is believed to make these solutions less suitable for spraying drying.

Claims

1.   A powdered composition comprising:

  • 25-35% of di-Itri-saccharides other than lactose;
  • 3-20% of lactose;
  • 2-15% milk protein other than processed soluble caseinate;

• 35-50% fat; and
• 3-7% emulsifier;

wherein the powdered composition comprises less than 10% of maltodextrin and / or glucose syrup having a DE of less than 40.

2. A powdered composition according to claim 1 which contains essentially no maltodextrin or glucose syrup having a DE of less than 40.

3. A powdered composition according to claim 1 or claim 2 which comprises less than 1% processed soluble caseinate,

4. A powdered composition according to claim 3 which contains essentially no processed soluble caseinate.

5. A powdered composition according to any of claims 1 to 4 wherein the di-/tri-saccharide comprises sucrose.

6. A powdered composition according to any of claims 1 to 5 wherein the milk protein is provided as skim milk powder.

7. A powdered composition according to claim 6 wherein the skim milk powder is present in an amount of from 5 to 50%.

8. A powdered composition according to any of claims 1 to 7 wherein the fat is a vegetable oil.

9. A powdered composition according to claim 8 wherein the vegetable oil is hardened palm kernel oil or hardened coconut oil.

10. A powdered composition according to any of claims 1 to 9 which comprises:

• 25-35% sucrose;
• 10-25% skim milk powder;
• 35-50% hardened vegetable oil; and
• 3-7% emulsifier.

11. A powdered composition according to claim 10 which comprises:

• 30-33% sucrose;
• 16-22% skim milk powder;
• 42-45% hardened vegetable oil; and
• 4-6% emulsifier.

12. A process for producing a powdered composition according to any of claims 1 to 11, the process comprising the steps of:

(i) producing a dispersion in water of (by weight of the total solids) 25-35% of di-/tri-saccharides other than lactose; 3-20% of lactose, 2-15% milk protein other than processed soluble caseinate, 35-50% fat and 3-7% emulsifier and which comprises less than 10% (by weight of total solids) of maltadextrin and / or glucose syrup having a DE of less than 40; and
(ii) spray-drying the dispersion to produce the powdered composition.

13. A process according to claim 12 wherein 0.2 - 1.5% of an anti-caking agent is added to the powdered composition after spray-drying, and the powdered composition is then further dried in a fluid bed dryer.

**Patentansprüche**

1. Pulverförmige Zusammensetzung, umfassend:

• 25-35% Di-/Trisaccharide, andere als Lactose,
• 3-20% Lactose,
• 2-15% Milchprotein, anderes als verarbeitetes lösliches Caseinat,

• 35-50% Fett und
• 3-7% Emulgator,

wobei die pulverförmige Zusammensetzung weniger als 10% Maltodextrin und/oder Glucosesirup mit einem DE von weniger als 40 umfasst.

2. Pulverförmige Zusammensetzung nach Anspruch 1, welche im Wesentlichen kein Maltodextrin oder Glucosesirup mit einem DE von weniger als 40 enthält.

3. Pulverförmige Zusammensetzung nach Anspruch 1 oder Anspruch 2, welche weniger als 1% verarbeitetes lösliches Caseinat umfasst.

4. Pulverförmige Zusammensetzung nach Anspruch 3, welche im Wesentlichen kein verarbeitetes lösliches Caseinat enthält.

5. Pulverförmige Zusammensetzung nach irgendeinem der Ansprüche 1 bis 4, wobei das Di-/Trisaccharid Sucrose umfasst.

6. Pulverförmige Zusammensetzung nach irgendeinem der Ansprüche 1 bis 5, wobei das Milchprotein als Magermilchpulver bereitgestellt wird.

7. Pulverförmige Zusammensetzung nach Anspruch 6, wobei das Magermilchpulver in einer Menge von 5 bis 50% vorliegt.

8. Pulverförmige Zusammensetzung nach irgendeinem der Ansprüche 1 bis 7, wobei das Fett ein pflanzliches Öl ist.

9. Pulverförmige Zusammensetzung nach Anspruch 8, wobei das pflanzliche Öl gehärtetes Palmkernöl oder gehärtetes Kokosnussöl ist.

10. Pulverförmige Zusammensetzung nach irgendeinem der Ansprüche 1 bis 9, welche umfasst:

    • 25-35% Sucrose,
    • 10-25% Magermilchpulver,
    • 35-50% gehärtetes pflanzliches Öl und
    • 3-7% Emulgator.

11. Pulverförmige Zusammensetzung nach Anspruch 10, welche umfasst:

    • 30-33% Sucrose,
    • 16-22% Magermilchpulver,
    • 42-45% gehärtetes pflanzliches Öl und
    • 4-6% Emulgator.

12. Verfahren zur Herstellung einer pulverförmigen Zusammensetzung nach irgendeinem der Ansprüche 1 bis 11, wobei das Verfahren die Schritte umfasst:

    (i) Herstellen einer Dispersion in Wasser (bezogen auf das Gewicht der Gesamtfeststoffe) von 25-35% Di-/Trisacchariden, andere als Lactose, 3-20% Lactose, 2-15% Milchprotein, anderes als verarbeitetes lösliches Caseinat, 35-50% Fett und 3-7% Emulgator und welche weniger als 10% (bezogen auf das Gewicht der Gesamtfeststoffe) Maltodextrin und/oder Glucosesirup mit einem DE von weniger als 40 umfasst, und
    (ii) Sprühtrocknen der Dispersion, um eine pulverförmige Zusammensetzung herzustellen.

13. Verfahren nach Anspruch 12, wobei 0,2-1,5% eines Antibackmittels nach dem Sprühtrocknen zu der pulverförmigen Zusammensetzung gegeben werden und die pulverförmige Zusammensetzung dann weiter in einem Wirbelschichttrockner getrocknet wird.

**Revendications**

1. Composition pulvérulente comprenant :

   • 25-35 % de di-/tri-saccharides différents du lactose ;
   • 3-20 % de lactose ;
   • 2-15 % de protéine de lait différente de caséinate soluble transformé ;
   • 35-50 % de graisse ; et
   • 3-7 % d'émulsionnant ;

   dans laquelle la composition pulvérulente comprend moins de 10 % de maltodextrine et/ou sirop de glucose ayant un DE inférieur à 40.

2. Composition pulvérulente selon la revendication 1 qui ne contient essentiellement aucune maltodextrine ou sirop de glucose ayant un DE inférieur à 40.

3. Composition pulvérulente selon la revendication 1 ou la revendication 2 qui comprend moins de 1 % de caséinate soluble transformé.

4. Composition pulvérulente selon la revendication 3 qui ne contient essentiellement pas de caséinate soluble transformé.

5. Composition pulvérulente selon l'une quelconque des revendications 1 à 4, dans laquelle le di-/tri-saccharide comprend du saccharose.

6. Composition pulvérulente selon l'une quelconque des revendications 1 à 5, dans laquelle la protéine de lait est fournie comme une poudre de lait écrémé.

7. Composition pulvérulente selon la revendication 6, dans laquelle la poudre de lait écrémé est présente dans une quantité de 5 à 50 %.

8. Composition pulvérulente selon l'une quelconque des revendications 1 à 7, dans laquelle la graisse est une huile végétale.

9. Composition pulvérulente selon la revendication 8, dans laquelle l'huile végétale est de l'huile de palmiste durcie ou de l'huile de noix de coco durcie.

10. Composition pulvérulente selon l'une quelconque des revendications 1 à 9, qui comprend :

    • 25-35 % de saccharose ;
    • 10-25 % de poudre de lait écrémé ;
    • 35-50 % d'huile végétale durcie ; et
    • 3-7 % d'émulsionnant.

11. Composition pulvérulente selon la revendication 10 qui comprend :

    • 30-33 % de saccharose ;
    • 16-22 % de poudre de lait écrémé ;
    • 42-45 % d'huile végétale durcie ; et
    • 4-6 % d'émulsionnant.

12. Procédé de production d'une composition pulvérulente selon l'une quelconque des revendications 1 à 11, le procédé comprenant les étapes de :

    (i) production d'une dispersion dans l'eau de (en masse de matières solides totales) 25-35 % de di-/tri-saccharides différents du lactose ; 3-20 % de lactose, 2-15 % de protéine de lait différente de caséinate soluble transformé, 35-50 % de graisse et 3-7 % d'émulsionnant et qui comprend moins de 10 % (en masse de matières solides totales) de maltodextrine et/ou sirop de glucose ayant un DE inférieur à 40 ; et de

(ii) séchage par pulvérisation de la dispersion pour produire la composition pulvérulente.

**13.** Procédé selon la revendication 12, dans lequel 0,2-1,5 % d'un agent anti-gâteau sont ajoutés à la composition pulvérulente après séchage par pulvérisation, et la composition pulvérulente est ensuite encore séchée dans un dispositif de séchage à lit fluidisé.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- *Journal of Food Engineering,* 1997, vol. 33, 221-226